# EUROPEAN PATENT APPLICATION

(11) **EP 1 772 861 A1**
(43) Date of publication of application: **11.04.2007**
(21) Application number: 05109240.1
(22) Date of filing: 05.10.2005
(51) Int. Cl.: G11B 7/14, G07F 17/16, G11B 27/00

(54) **Fast optical recording apparatus**

(71) Applicant: DEUTSCHE THOMSON-BRANDT GMBH, 78048 Villingen-Schwenningen (DE)
(72) Inventor: Uhde, Dietmar, 78126 Königsfeld (DE); Lehmann, Norbert, 78089 Unterkirnach (DE); Weissmann, Gerhard, 78052 VS-Rietheim (DE)
(74) Representative: Thies, Stephan

(57) **Abstract**

The present invention relates to an apparatus for writing to or for reading from and writing to optical recording media (15), which is capable of high-speed recording.
According to the invention, the apparatus includes two or more pickups (20) for writing to an optical recording medium (15), wherein at least two pickups (20) of the two or more pickups (20) are arranged on a single optics body and adapted to move together as a pickup group (2) relative to the optical recording medium (15).

## Description

The present invention relates to an apparatus for writing to or for reading from and writing to optical recording media, which is capable of high-speed recording.

Nowadays a plurality of recorders for optical recording media, e.g. recorders for CD (Compact Disk) or DVD (Digital Versatile Disk) are available to consumers. These recorders generally allow to record on a recording medium with an increased speed using a higher rotation speed of the optical recording medium, e.g. 2X, 4X, 8X etc., where X denotes the nominal speed associated to the recording medium. For recording a two hours movie on a DVD a 8X recorder needs approximately 15 minutes. While this is acceptable for a consumer electronics device, there are circumstances where the time needed for recording has to be reduced even more. For example, US 2004/0064377 discloses a Kiosk machine that allows customers to browse a movie database, view movie descriptions, and then have a copy of the movie recorded on a DVD disk. For such a system a recording time of approximately one minute is desirable.

Instead of or in addition to using an increased rotation speed, it has been proposed for example in JP 11-167762 to use multiple pickups for simultaneously accessing different parts of an optical disk. Though the disclosed device is capable of high-speed recording, a complicated and expensive mechanical layout is necessary.

It is an object of the invention to propose an apparatus for writing to optical recording media, which is capable of high-speed recording and which has a simplified mechanical layout.

According to the invention, an apparatus for writing to optical recording media includes two or more pickups for writing to an optical recording medium, wherein at least two pickups of the two or more pickups are arranged on a single optics body and adapted to move together as a pickup group relative to the optical recording medium. By combining at least some of the pickups to a pickup group, they can be moved together using only a single motor. At the same time high-speed recording is enabled. By combining, for example, ten pickups to a single pickup group, the recording time is decreased to approximately one tenth of the recording time of a single pickup. Though the individual pickups cannot completely independently access different parts of an optical recording medium, this capability is not needed when a complete optical recording medium is to be recorded. Advantageously, the movement range of the pickup group is such that the access ranges of adjacent individual pickups on the optical recording medium overlap at least partially. In this way a specific location on the optical recording medium can by accessed by different pickups, which allows to compensate for a malfunction of one or more of the pickups. An address control for writing ensures that no overwriting or gaps occur between the zones written by the different pickups. Preferentially, the apparatus is optimized for only one type of recording format. Special, e.g. certified, optical recording media having tighter specifications, which are optimized for a high recording speed are advantageously used for recording.

Preferably, the apparatus has two or more pickup groups. In this way the size of the individual pickups does not need to be reduced as much as if all pickups were combined to a single pickup group, as the different pickup groups can be arranged at different positions relative to a turntable carrying the optical recording medium. For example, instead of a single pickup group with ten pickups two pickup groups with five pickups each are advantageously arranged on opposite sides of the turntable. Preferentially, also the access ranges of the different pickup groups on the optical recording medium overlap at least partially.

According to one aspect of the invention, the pickup groups are stationary and the turntable carrying the optical recording medium is adapted to move relative to the pickups groups. Alternatively, both the pickup groups and the turntable are adapted to move relative to each other. Both solutions have the advantage that the pickups are isolated from servo voltages, which reduces servo current noise.

Preferably, four pickup groups are arranged crosswise around the turntable. In this case each pickup group only needs a small number of pickups, e.g. three pickups, to enable high-speed recording. This facilitates the design of the pickups, as more space is available for the individual pickups. Other numbers of pickup groups, e.g. three or five groups, can likewise be used.

Advantageously, the apparatus includes means for generating a data image for writing an optical recording medium, which is adapted to be reproduced with constant linear velocity (CLV), with constant angular velocity (CAV). A DVD is reproduced at constant linear velocity. However, due to the special arrangement of the pickups in the pickups groups, it is recorded at constant angular velocity. The means for generating the data image ensure that the data recorded at CAV can be correctly reproduced at CLV. Alternatively the apparatus is provided with the necessary data image by an external source, e.g. a central server or a data source which is connected to the apparatus. This has the advantage that the apparatus does not need to generate the data image itself, which reduces the necessary processing power of the apparatus. In addition, the special data format of the data image reduces the risk that a potential hacker uses the data for making illegal copies, especially if the recording apparatus is used in a public environment, e.g. a DVD kiosk. A hacker cannot directly use the data image for making copies, as the data first have to be retransformed to original data. Additional security can be achieved by providing different apparatuses with different distances between the pickups of the pickup group. In this case the data image is specific to the recording apparatus.

Preferably, the apparatus includes a memory for storing the complete data to be written on an optical recording medium. As the generating of the data image needs a non-negligible processing power, it is preferentially finished before data recording starts. The data image stored in the memory is advantageously supplied to a data formatter supplying the data to be written to the different pickups.

Advantageously, the apparatus includes a printing head for printing a label onto an optical recording medium. When the printing head is adapted to print onto the optical recording medium during the recording operation, no additional time is needed after recording for providing the optical recording medium with a printed label.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows the layout of a kiosk for recording optical recording media,
- Fig. 2: depicts in more detail the design of a high-speed recorder for optical recording media,
- Fig. 3: shows an exemplary setup of a multiple pickup group,
- Fig. 4: shows a high-speed recorder using four pickup groups, and
- Fig. 5: depicts a different view of the high-speed recorder of Fig. 4.

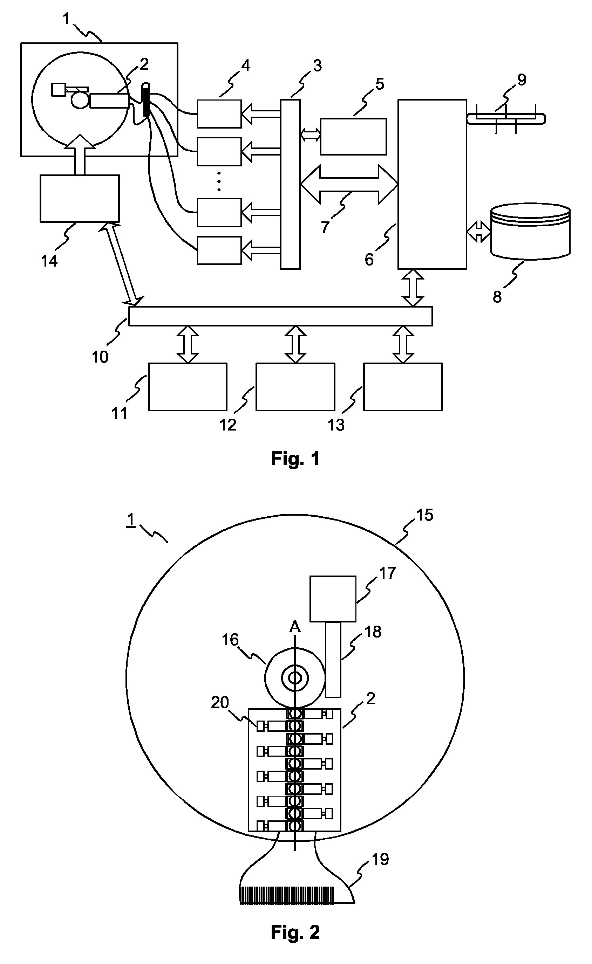

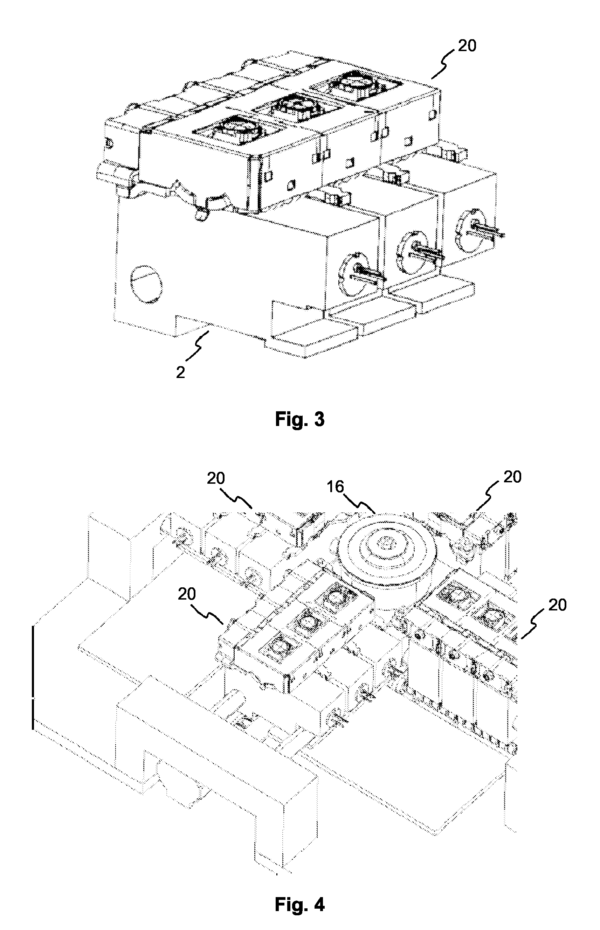

In Fig. 1 the layout of a kiosk for recording a DVD is shown schematically. The kiosk includes a high-speed recorder 1 with a pickup group 2, which is shown in more detail in Fig. 2 and Fig. 3. The pickup group 2 is controlled by a drive controller 3, which also serves as a formatter and transmits the data for recording to the pickup group 2 via a plurality of frontends 4, which are responsible for focusing and tracking control of the associated pickups of the pickup group 2. The data for recording a complete DVD is stored in a memory 5 as encoded and authored data from a host 6, which is preferably recoded to match the capacity of the DVD. The host 6 is connected to the formatter and drive controller 3 via a bus 7, e.g. an S-ATA bus, and receives its source data from a mass storage device 8, e.g. one or more hard disk drives storing a couple of hundreds of movies. Source data that is not available locally may be retrieved by the host 6 via a network connection 9, e.g. a high-speed modem or an Ethernet connection. A communication interface 10 with a plurality of inputs and outputs is provided for communication between the host 6, an optional print head 14 for printing on the DVD, and a plurality of peripherals such as an event handler 11 for detecting and evaluating events, a user interface 12, e.g. a touch screen, and a cashing device 13 for payment. If a print head 14 is provided, advantageously the printing on the DVD is performed during recording. In this way no additional delay is caused by the printing process.

In Fig. 2 the design of the high-speed recorder 1 is shown in more detail. The recorder 1 includes a pickup group 2, in which ten pickups 20 are arranged on a single optics body. Of course, other numbers of individual pickups 20 can likewise be used. The number is mainly limited by the size of the pickups 20. The pickup group 2 is connected to the formatter and drive controller 3 of Fig. 1 via a connector 19. For recording the whole pickup group 2 is moved along an axis A relative to a recordable DVD 15, which is placed on the turntable 16 driven by a spindle motor. Using ten pickups 20 a movement of approximately 3.6 mm is necessary to cover the whole DVD. In the example in Fig. 2 the relative movement is achieved by moving the turntable 16 and the spindle motor together with the DVD 15, while the pickup group 2 remains stationary. For this purpose a shaft 18 and a shaft motor 17 are provided. Of course, it is likewise possible to move the pickup group 2 while the turntable 16 and the spindle motor remain stationary, or to move both the pickup group 2 and the turntable 16 with the spindle motor. To avoid overwriting or gaps between the zones on the DVD recorded by the individual pickups 20 an address control is performed by the formatter and drive controller 3. In addition, adapted data rates are employed by the individual pickups 20 along the movement path relative to the DVD to create a CLV (constant linear velocity) image on the DVD, which is rotated at CAV (constant angular velocity). These adapted data rates can be omitted for optical recording media using CAV. Preferably recording is performed on special blank DVDs, which are optimized and certified for the tighter specifications that might be needed for the high recording speed. Advantageously, these special DVDs also allow label printing.

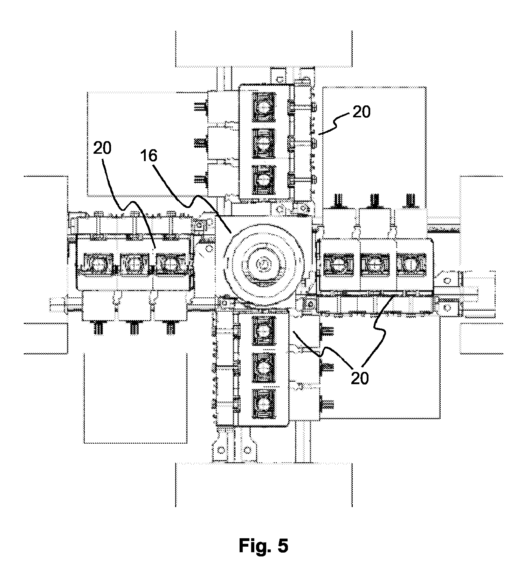

Fig. 3 shows an exemplary setup of a pickup group 2 using three pickups 20 on a single optics body. Each pickup 20 has its own actuator and optics, which allows to perform tracking and focusing correction for each individual pickup 20 while at the same time moving all pickups 20 as a whole. Four of these pickup groups 2 are used in the high-speed recorder depicted in Figs. 4 and 5. The pickup groups 2 are arranged crosswise around the spindle motor 16. In this arrangement the spindle motor 16 remains stationary while the pickup groups 2 are moved. If only two pickup groups are arranged on opposite sides of the turntable 16, it is likewise possible to keep the pickup groups 2 stationary and to move the turntable 16 instead.

## Claims

1. Apparatus for writing to optical recording media, including two or more pickups (20) for writing to an optical recording medium (15), **characterized in that** at least two pickups (20) of the two or more pickups (20) are arranged on a single optics body and adapted to move together as a pickup group (2) relative to the optical recording medium (15).

2. Apparatus according to claim 1, **characterized in that** it has two or more pickup groups (2).

3. Apparatus according to claim 1 or 2, **wherein** the pickup groups (2) are stationary and a turntable (16) carrying the optical recording medium (15) is adapted to move relative to the pickups groups (2).

4. Apparatus according to claim 1 or 2, **wherein** both the pickup groups (2) and a turntable (16) carrying the optical recording medium (15) are adapted to move relative to each other.

5. Apparatus according to claim 1 or 2, **wherein** four pickup groups (2) are arranged crosswise around a turntable (16) carrying the optical recording medium (15).

6. Apparatus according to one of claims 1 to 5, **including** means (3, 6) for generating and/or receiving a data image for writing an optical recording medium (15), which is adapted to be reproduced with constant linear velocity, with constant angular velocity.

7. Apparatus according to one of claims 1 to 6, **including** a data formatter (3) for supplying the data to be written to the different pickups (20).

8. Apparatus according to one of claims 1 to 7, **including** a memory (5) for storing the complete data to be written on an optical recording medium (15).

9. Apparatus according to one of claims 1 to 8, **including** a printing head (14) for printing a label onto an optical recording medium (15).

10. Apparatus according to claim 9, **wherein** the printing head (14) is adapted to print onto the optical recording medium (15) during writing of the optical recording medium (15).

11. Method for providing an apparatus for writing to optical recording media with multimedia content for writing, **having** the steps of:
- generating a data image for writing an optical recording medium (15), which is adapted to be reproduced with constant linear velocity, with constant angular velocity, and
- delivering the data image to the apparatus.

12. Method according to claim 11, **wherein** different apparatuses have different distances between the pickups (20) of the pickup groups (2) and the data image is specific to a specific apparatus.
